# EUROPÄISCHE PATENTSCHRIFT

(11) **EP 1 145 186 B1**
(45) Veröffentlichungstag und Bekanntmachung des Hinweises auf die Patenterteilung: **18.02.2004**
(21) Anmeldenummer: 99963238.3
(22) Anmeldetag: 13.11.1999
(51) Int. Cl.: G06K 9/72

(54) **VERFAHREN UND VORRICHTUNG ZUR LEISTUNGSSTEIGERUNG EINES VERKEHRSZEICHENERKENNUNGSSYSTEMS**
METHOD AND APPARATUS FOR INCREASING THE POWER OF A TRAFFIC SIGN RECOGNITION SYSTEM
PROCEDE ET DISPOSITIF POUR L'ACCROISSEMENT DE PUISSANCE D'UN SYSTEME DE RECONNAISSANCE DE SIGNALISATION DU TRAFIC

(30) Priorität: 14.11.1998 DE 19852631
(43) Veröffentlichungstag der Anmeldung: 17.10.2001
(73) Patentinhaber: DaimlerChrysler AG, 70567 Stuttgart (DE)
(72) Erfinder: JANSSEN, Reinhard, D-89075 Ulm (DE); LINDNER, Frank, D-89075 Ulm (DE); ULMER, Berthold, D-73728 Esslingen (DE)
(86) Internationale Anmeldenummer: PCT/DE1999/003627
(87) Internationale Veröffentlichungsnummer: WO 2000/030024

(56) Entgegenhaltungen:
- EP-A- 1 114 371
- DE-A- 19 505 487
- DE-A- 19 842 176
- PATENT ABSTRACTS OF JAPAN vol. 1995, no. 03, 28. April 1995 (1995-04-28) & JP 06 348991 A (SUMITOMO ELECTRIC IND LTD), 22. Dezember 1994 (1994-12-22)

## Beschreibung

### Beschreibung für folgende Vertragsstaaten : DE, FR, IT

Die Erfindung betrifft ein Verfahren zur Leistungssteigerung eines Systems zur Erkennung und/oder Anzeige von Verkehrszeichen gemäß der Oberbegriffe der Patentansprüche 1 und 10.

Aus den Schriften DE 3619824 C2 und DE 198 52 631 A1 sind Verfahren und Vorrichtungen bekannt, welche innerhalb von Bildern von Verkehrsszenen Verkehrszeichen erkennen, klassifizieren und zur Anzeige bringen. Hierbei analysieren die Verfahren von Bildsensoren zur Verfügung gestellte Bilddaten ohne jegliches Vorwissen über das aktuelle Szenario. Aus diesem Grunde sind diese vorbekannten Verfahren zeitaufwendig und bedürfen um echtzeitfähig arbeiten zu können einer hohen Rechenkapazität und -leistung.

In der nachveröffentlichten europäischen Offenlegungsschrift EP-A-114371 mit Benennung der Staaten Deutschland, Italien und Frankreich wird ein Verfahren beziehungsweise ein gekoppeltes System zur Verkehrszeichenerkennung und Navigation vorgeschlagen, das eine bidirektionale Datenübertragung zwischen Verkehrszeichenerkennungseinrichtung und Navigationseinrichtung ermöglicht. Hierbei werden die von einem kartenbasierten Navigationssystem gelieferten Daten dazu herangezogen um die Erkennung der die Verkehrszeichen abbildenden Kameradaten auszuwerten.

Die japanische Schrift JP 06348991 offenbart ein System und eine Verfahren zur Erkennung von Verkehrszeichen, bei welchem das System eine Farbkamera und eine damit verbundene Auswerteeinheit zur Bilderkennung aufweist. Die Erfindung hat zum Ziel durch Auswertung der Farbinformation des Bildinformation Fahrspurbegrenzungen und Einrichtungen zur Verkehrsregelung automatisch zu erkennen. Hierbei werden jedoch zusätzlich zur Bildinformation der Farbkamera keine weitere Information von kartenbasierten Navigationssystemen oder Verkehrsinformationssystemen zur Steigerung der Erkennungsleistung ausgenutzt.

Aufgabe der Erfindung ist es daher ein Verfahren und eine Vorrichtung zu finden, welche die Leistungsfähigkeit von vorbekannten Systemen zur Erkennung und Anzeige von Inhalten von Verkehrszeichen erhöht. Hierzu soll zum einen die für einen echtzeitfähigen Betrieb notwendige Rechnerkapazität reduziert und zum anderen Qualität der Anzeige der Inhalte der erkannten Verkehrszeichen verbessert werden.

Die Aufgabe wird durch ein erfindungsgemaßes Verfahren und eine Vorrichtung wie beansprucht gelöst.

In einer denkbaren Ausführungsform der durch die Ansprüche definierten Erfindung, wird die Kommunikation zwischen dem System zur Erkennung und/oder Anzeige von Verkehrszeichen und den kartenbasierten Navigationssystemen bzw. den Verkehrsinformationssystemen über einen Fahrzeugdatenbus durchgeführt.

In vorteilhafter Weise kann das System zur Erkennung von Verkehrszeichen auf erhöhte Leistung geschaltet werden, wenn auf der Grundlage von Informationen wie sie von kartenbasierten Navigationssystem und/oder einem Verkehrsinformationssystemen bekannt werden, daß das Fahrzeug einen Bereich passiert, der bezüglich einer zuverlässigen Erkennung von Verkehrszeichen problematisch ist. Beispiele solcher besonders zu berücksichtigender Bereiches sind unter anderem Ortseingänge und Ortsausgänge. Dort befinden sich Ortseingangs- und Ortsausgangstafeln, welche Geschwindigkeitsbeschränkungen, bzw. Aufhebungen dieser Beschränkungen implizieren. Die Tafeln sind jedoch nicht wie üblich kreisrund, sondern rechteckig. Die Tafeln sind leicht mit Werbetafeln zu verwechseln, insbesondere dann, wenn die Verkehrszeichenerkennung mittels monochromer Kameras durchgeführt wird, da hier die relativ signifikante gelbe Färbung der Tafeln nicht zur notwendigen Geltung kommt. Ein weiterer besonders zu berücksichtigender Bereich ist im Umfeld von Verkehrsbeeinflussungsanlagen und Wechselschildern gegeben. Hier muß mit gesonderter Darstellung und Ausprägung der Verkehrszeichen gerechnet werden, so z.B. mit einer inversen Darstellung der Schwarz- und Weißanteile der Verkehrszeichen aus Gründen besserer Nachtsichtbarkeit. Auch ist mit einem plötzlich auftretenden Wechsel oder Einschalten des Verkehrszeichensymbols zu rechnen, z.B, plötzliche Beschränkung auf Tempo 120 km/h auf Autobahnen. Eine besondere Art von Verkehrszeichen stellen Ampeln dar. Prinzipiell sind sie mit einem Wechselschild vergleichbar, da sich auch der Zustand ihrer Anzeige ändern kann und somit einer erhöhten Aufmerksamkeit bedarf. Durch kartenbasierte Information ist es jedoch möglich das System zur Verkehrszeichenerkennung in Bereichen von Ampelanlagen (z.B.: Kreuzungen, Bahnübergänge) mit erhöhter Erkennungsleistung zu betreiben.

Während die vorangegangen Beispiele hauptsächlich in alleinigem Zusammenspiel mit Informationen von kartenbasierten Navigationssystemen zu sehen sind, werden nachfolgend beispielhaft Situationen dargestellt, bei denen erhöhte Erkennungsleistung gefordert wird und welche gewinnbringend mit Informationen die von Verkehrsinformationssystem stammen verknüpft werden. Dies ist im wesentlichen die Information, daß in einem bestimmten vom Fahrzeug befahrenen Bereich schlechte Sicht durch Nebel oder Regen vorherrscht. In einer solchen Situation ist verstärkt mit kontrastarmen Bilddaten zu rechnen, so daß das System zur Verkehrszeichenerkennung vorzugsweise verstärkt auf eine Kontrastverbesserung der Bilddaten hinwirken sollte. Vorteilhaft wirkt sich auch die Einbeziehung von Stauwarnungen aus, da hier dem Beobachter frühzeitig, in sinnvollem Abstand zur vorhanden Verkehrsstörung im Rahmen der Anzeige von Verkehrszeichen ein Stausymbol dargeboten werden kann, ohne daß erste ein solches Verkehrszeichen passiert werden muß.

Diese erfindungsgemäße Möglichkeit die Verkehrszeichenerkennung temporär in ihrer Leistung zu variieren eröffnet die Möglichkeit,eine Erkennung von Verkehrszeichen ökonomisch zu realisieren. Es ist auch in vorteilhafter Weise nicht notwendig ein System bereitzustellen, welches im normalen Betrieb mangelhaft ausgelastet ist und nur in kritischen Situationen voll ausgelastet wird. Sondern es wird die Möglichkeit eröffnet, mittels moderner Mulitprozessor-Datenverarbeitung im Rückgriff auf die interne Fahrzeugdatenkommunikation und die in modernen Fahrzeugen in einer Vielzahl vorhandene Datenprozessoren, die momentan freie, nicht ausgenutzte Rechnerleistung für einen sinnvollen, ökonomischen Einsatz zu nutzen.

Ein weiteres vorteilhaftes Ausgestaltungsmerkmal der Erfindung besteht darin, daß in einem bereitgestellten Datenspeicher Informationen über die Art und/oder die Position und/oder den Zustand und/oder die Sichtbarkeit und/oder die Größe des erkannten Verkehrszeichens gespeichert wird. Dabei kann dieser Datenspeicher entweder dem kartenbasierten Navigationssystem bzw. dem Verkehrsinformationssystem zugeordnet sein, oder aber auch Bestandteil des Systems zur Verkehrszeichen Erkennung und/oder Anzeige sein. Durch die Kombination mit dieser Datenspeicherung kann der Beobachter durch ein akustisches oder optisches Signal darauf aufmerksam gemacht werden, dass sich entlang einer bereits einmal befahrenen Wegstrecke eine Änderung in Bezug auf die Position beziehungsweise des Vorhandenseins eines Verkehrszeichens ergeben hat. Dadurch ist es möglich einen Beobachter zum Beispiel auf baustellen-bedingte Verkehrsregelungen oder geänderte Vorfahrtsregelung im Kreuzungsbereich hinzuweisen. In vorteilhafterweise wird gleichermaßen der Beobachter auch dann einen Wamhinweis erhalten, wenn das System zur Verkehrszeichenerkennung ein tatsächlich vorhandenes Verkehrszeichen nicht erkennen oder nur ungenügend klassifizieren konnte.

Weiterhin wirkt sich bei der Erfindung positiv aus, daß auf Grundlage der kartenbasierten Positionsbestimmung die Möglichkeit eröffnet wird, ein Programm zur Anwendung einer Entscheidungslogik zu veranlassen, ein Verkehrszeichen so lange anzuzeigen, bis eine vorgegebene Wegstrecke zurückgelegt ist. Diese vorgegebene Wegstrecke ist vorzugsweise klassenspezifisch und kann durch eine Speichereinheit zur Verfügung gestellt werden. Es ist beispielsweise in der Bundesrepublik Deutschland eine Straßenauffahrt gleichbedeutend mit einer impliziten Aufhebung von Ge- und Verboten, wie Geschwindigkeitsbegrenzungen. Zudem müssen Geschwindigkeitsbegrenzungen nach spätestens 3 km erneuert werden, ansonsten gelten sie als aufgehoben. Durch dieses erfindungsgemäße Merkmal wird also erreicht, daß ein Verkehrszeichen, auch ohne explizite Aufhebung, nur so lange wie unbedingt notwendig angezeigt wird.

Besonders vorteilhaft wirkt sich die Erfindung in der Kombination mit einem System zur Verkehrszeichenerkennung aus, bei welchem die Bilddaten des Bildsensors in einer Informationsverarbeitungseinheit analysiert und klassifiziert und auf Grundlage des Ergebnisses einer Klassifikation Bildausschnitte und/oder in einer Speichereinheit gespeicherte, eine symbolische Darstellung repräsentierende Bilddaten in einer Speichereinheit ablegt und mittels einer Anzeigeeinheit darstellt. Hierbei wird im Rahmen der Analyse in der Informationsverarbeitungseinheit ermittelt, ob die Bilddaten des Bildsensors ein oder mehrere Objekte enthalten, welche mit hinreichender Wahrscheinlichkeit Verkehrszeichen sind. In Folge werden die so ermittelten Objekte einer Weiterverarbeitung und Klassifikation zugeführt. In besonders vorteilhafter Weise, wird im Rahmen der Erfindung bei der Weiterverarbeitung der Bilddaten der Objekte eine Separierung in verkehrszeichenspezifische Oberklassen und Unterklassen vorgenommen. Dabei werden entsprechende klassenspezifische Merkmalsdaten extrahiert und einer getrennten Klassifikation zugeführt. Abhängig davon ob die klassenspezifischen Merkmalsdaten bei der Klassifikation mit hoher Wahrscheinlichkeit korrekt erkannt wurden, werden sie durch entsprechende in einer Speichereinheit gespeicherte, die symbolische Darstellung repräsentierende Bilddaten oder durch die entsprechenden ursprüngliche vom Bildsensor stammenden Bilddaten ersetzt. Die aus dieser Ersetzung resultierenden Bilddaten werden zu einem synthetischen Bild eines Verkehrszeichens kombiniert und dieses Bild dann in der Speichereinheit gespeichert und mittels der Anzeigeeinheit zur Anzeige gebracht.

Ein wesentlicher Vorteil bei einem solchen System zur Verkehrszeichenerkennung besteht darin, daß mit ihr nicht mehr das rechenaufwendige und mit hohen Rückweisungsquoten behaftete Problem der Klassifikation eines in seiner Gesamtheit recht komplexen Verkehrszeichen gelöst werden muß, sondern das Problem wird durch die der Klassifikation vorangegangene Separierung der detektierten Objekte in verkehrszeichenspezifische Oberklassen und Unterklassen auf eindeutigere und somit einfachere Klassifikationsprobleme zurückgeführt. Hierbei werden gleichermaßen die Anforderungen an die notwendige Rechenleistung und Bildqualität reduziert.

Beispielhaft soll kurz anhand eines hier anhand eines Geschwindigkeitsbegrenzungszeichens die Aufteilung eines Verkehrszeichens in verkehrszeichenspezifische Oberklassen und Unterklassen erläutert werden. Die verkehrszeichenspezifische Oberklasse dieses Verkehrszeichen ist die Klasse der Verbotszeichen, welche als Merkmalsdaten eine Runde Form mit einem innenliegenden Symbol aufweisen. Im speziellen Fall eines Geschwindigkeitsbegrenzungszeichens ist das innenliegende Symbol eine Zahl welche von einem breiten, roten Ring umschlossen ist. Im Fall des Geschwindigkeitsbegrenzungszeichens ist das innenliegende Symbol, d.h. die Angabe auf welche Geschwindigkeit eine Fahrgeschwindigkeit zu begrenzen ist, ein Element der verkehrszeichenspezifischen Unterklasse.

Das System zur Verkehrszeichenerkennung, mit welchem vorteilhaft die Erfindung zur Leistungssteigerung eines Systems zur Erkennung und/oder Anzeige von Verkehrszeichen kombiniert werden kann, prüft mit vergleichsweise geringer Rechenleistung und geringem apparativen Aufwand (beispielsweise einer Monochromkamera anstatt einer hochauflösenden Farbkamera) in Echtzeit nach, ob es sich bei einem Objekt bestimmter Form innerhalb des aufgenommenen Bildes um ein Verkehrszeichen handelt. Ist dies der Fall, so werden die klassenspezifischen Merkmalsdaten des Objekts einer getrennten Klassifikation zur Identifikation des Verkehrszeichens zugeführt. In der Regel kommt hierbei ein hierarchisch organisierter Klassifikator zum Einsatz. Die Klassifikation erfolgt dabei in mehreren Stufen. Hierzu werden zuerst nur die der Oberklasse des Objektes zugehörigen Merkmalsdaten einer Klassifikation zugeführt. Bei erfolgreicher Klassifikation (d.h. die Klasse konnte mit hoher Wahrscheinlichkeit korrekt erkannt werden) werden die Merkmalsdaten durch die entsprechende in der Speichereinheit gespeicherte symbolische Darstellung der Oberklasse ersetzt. Blieb die Klassifikation erfolglos (d.h. die Klasse konnte nicht mit hoher Wahrscheinlichkeit korrekt erkannt werden) werden die Merkmalsdaten der Oberklasse und die Merkmalsdaten der Unterklasse durch die entsprechenden ursprünglichen vom Bildsensor stammenden Bilddaten ersetzt und die Klassifikationprozedur wird beendet. Ein weiterer Schritt innerhalb der Klassifikationsprozedur wird dann eingeleitet, wenn die Klassifikation der Oberklasse erfolgreich war. In diesem Fall werden nachfolgend die der Unterklasse des Objektes zugehörigen Merkmalsdaten einem Klassifikator zugeführt. Bei erfolgreicher Klassifikation dieser Unterklasse (d.h. die Klasse konnte mit hoher Wahrscheinlichkeit korrekt erkannt werden) werden die Merkmalsdaten durch die entsprechende in der Speichereinheit gespeicherte symbolische Darstellung der Unterklasse ersetzt. Andererseits werden bei erfolgloser Klassifikation (d.h. die Klasse konnte nicht mit hoher wahrscheinlichkeit korrekt erkannt werden) die Merkmalsdaten der Unterklasse durch die entsprechenden ursprünglichen vom Bildsensor stammenden Bilddaten ersetzt.

Mit diesem hierarchischen Vorgehen wird eine Verkehrszeichenerkennung mit geringer Rückweisungsquote zur Verfügung gestellt. Dabei können die beiden hierarchischen Stufen zur Identifikation der Oberklasse beziehungsweise zur Identifikation der Unterklasse selbst wieder hierarchisch organisiert sein. Bezüglich der Gestaltung der innerhalb der hierarchischen Klassifikation eingesetzten Klassifikatoren ist es denkbar, diese so zu gestalten, daß sie auf Grundlage eines Vergleichs von Distanzmaßen der ihnen gelieferten Merkmalsdaten von in der Speichereinheit gespeicherten klassentypischen Merkmalsdatensätzen entscheiden. Hierbei wird das als Verkehrszeichen identifizierte Objekt jener Oberklasse zugeordnet, zu welcher die Distanz im Merkmalsraum am geringsten ist. Es ist dabei möglich eine Toleranzschwelle zu definieren der mit dem minimalen Distanzwert verglichen wird, wobei das Unterschreiten des Toleranzwertes durch den Distanzwert als Hinweis auf eine mit hoher Wahrscheinlichkeit korrekt erfolgte Erkennung dient. In einer anderen vorteilhaften Ausgestaltung ist es auch möglich die Klassifikatoren so zu gestalten, daß sie mit Hilfe von verkehrszeichenspezifischen Lernstichproben trainiert werden können. Dieses Vorgehen ist besonders vorteilhaft, da die Qualität der von dem Bildsensor gelieferten Bilddaten stark von Umweltfaktoren wie Wetter und Lichtverhältnissen abhängig sind.

### Beschreibung für folgenden Vertragsstaat : GB

Die Erfindung betrifft ein Verfahren zur Leistungssteigerung eines Systems zur Erkennung und/oder Anzeige von Verkehrszeichen gemäß der Oberbegriffe der Patentansprüche 1 und 10.

Aus den Schriften DE 3619824 C2 und DE 198 52 631 A1 sind Verfahren und Vorrichtungen bekannt, weiche innerhalb von Bildern von Verkehrsszenen Verkehrszeichen erkennen, klassifizieren und zur Anzeige bringen. Hierbei analysieren die Verfahren von Bildsensoren zur Verfügung gestellte Bilddaten ohne jegliches Vorwissen über das aktuelle Szenario. Aus diesem Grunde sind diese vorbekannten Verfahren zeitaufwendig und bedürfen um echtzeitfähig arbeiten zu können einer hohen Rechenkapazität und -leistung.

In der nachveröffentlichten europäischen Offenlegungsschrift EP-A-114371 mit Benennung der Staaten Deutschland, Italien und Frankreich wird ein Verfahren beziehungsweise ein gekoppeltes System zur Verkehrszeichenerkennung und Navigation vorgeschlagen, das eine bidirektionale Datenübertragung zwischen Verkehrszeichenerkennungseinrichtung und Navigationseinrichtung ermöglicht. Hierbei werden die von einem kartenbasierten Navigationssystem gelieferten Daten dazu herangezogen um die Erkennung der die Verkehrszeichen abbildenden Kameradaten auszuwerten.

Die japanische Schrift JP 06348991 offenbart ein System und eine Verfahren zur Erkennung von Verkehrszeichen, bei welchem das System eine Farbkamera und eine damit verbundene Auswerteeinheit zur Bilderkennung aufweist. Die Erfindung hat zum Ziel durch Auswertung der Farbinformation des Bildinformation Fahrspurbegrenzungen und Einrichtungen zur Verkehrsregelung automatisch zu erkennen. Hierbei werden jedoch zusätzlich zur Bildinformation der Farbkamera keine weitere Information von kartenbasierten Navigationssystemen oder Verkehrsinformationssystemen zur Steigerung der Erkennungsleistung ausgenutzt.

Aufgabe der Erfindung ist es daher ein Verfahren und eine Vorrichtung zu finden, welche die Leistungsfähigkeit von vorbekannten Systemen zur Erkennung und Anzeige von Inhalten von Verkehrszeichen erhöht. Hierzu soll zum einen die für einen echtzeitfähigen Betrieb notwendige Rechnerkapazität reduziert und zum anderen Qualität der Anzeige der Inhalte der erkannten Verkehrszeichen verbessert werden. Die Aufgabe wird durch ein erfindungsgemãßer Verfahren und eine Vorrichtung wie beansprucht gelöst.

In einer denkbaren Ausführungsform der durch die Ansprüche definierten Erfindung, wird die Kommunikation zwischen dem System zur Erkennung und/oder Anzeige von Verkehrszeichen und den kartenbasierten Navigationssystemen bzw. den Verkehrsinformationssystemen über einen Fahrzeugdatenbus durchgeführt.

In vorteilhafter Weise kann das System zur Erkennung von Verkehrszeichen auf erhöhte Leistung geschaltet werden, wenn auf der Grundlage von Informationen wie sie von kartenbasierten Navigationssystem und/oder einem Verkehrsinformationssystemen bekannt werden, daß das Fahrzeug einen Bereich passiert, der bezüglich einer zuverlässigen Erkennung von Verkehrszeichen problematisch ist. Beispiele solcher besonders zu berücksichtigender Bereiches sind unter anderem Ortseingänge und Ortsausgänge. Dort befinden sich Ortseingangs- und Ortsausgangstafeln, welche Geschwindigkeitsbeschränkungen, bzw. Aufhebungen dieser Beschränkungen implizieren. Die Tafeln sind jedoch nicht wie üblich kreisrund, sondern rechteckig. Die Tafeln sind leicht mit Werbetafeln zu verwechseln, insbesondere dann, wenn die Verkehrszeichenerkennung mittels monochromer Kameras durchgeführt wird, da hier die relativ signifikante gelbe Färbung der Tafeln nicht zur notwendigen Geltung kommt. Ein weiterer besonders zu berücksichtigender Bereich ist im Umfeld von Verkehrsbeeinflussungsanlagen und Wechselschildern gegeben. Hier muß mit gesonderter Darstellung und Ausprägung der Verkehrszeichen gerechnet werden, so z.B. mit einer inversen Darstellung der Schwarz- und Weißanteile der Verkehrszeichen aus Gründen besserer Nachtsichtbarkeit. Auch ist mit einem plötzlich auftretenden Wechsel oder Einschalten des Verkehrszeichensymbols zu rechnen, z.B, plötzliche Beschränkung auf Tempo 120 km/h auf Autobahnen. Eine besondere Art von Verkehrszeichen stellen Ampeln dar. Prinzipiell sind sie mit einem Wechselschild vergleichbar, da sich auch der Zustand ihrer Anzeige ändern kann und somit einer erhöhten Aufmerksamkeit bedarf. Durch kartenbasierte Information ist es jedoch möglich das System zur Verkehrszeichenerkennung in Bereichen von Ampelanlagen (z.B.: Kreuzungen, Bahnübergänge) mit erhöhter Erkennungsleistung zu betreiben.

Während die vorangegangen Beispiele hauptsächlich in alleinigem Zusammenspiel mit Informationen von kartenbasierten Navigationssystemen zu sehen sind, werden nachfolgend beispielhaft Situationen dargestellt, bei denen erhöhte Erkennungsleistung gefordert wird und welche gewinnbringend mit informationen die von Verkehrsinformationssystem stammen verknüpft werden. Dies ist im wesentlichen die Information, daß in einem bestimmten vom Fahrzeug befahrenen Bereich schlechte Sicht durch Nebel oder Regen vorherrscht. In einer solchen Situation ist verstärkt mit kontrastarmen Bilddaten zu rechnen, so daß das System zur Verkehrszeichenerkennung vorzugsweise verstärkt auf eine Kontrastverbesserung der Bilddaten hinwirken sollte. Vorteilhaft wirkt sich auch die Einbeziehung von Stauwarnungen aus, da hier dem Beobachter frühzeitig, in sinnvollem Abstand zur vorhanden Verkehrsstörung im Rahmen der Anzeige von Verkehrszeichen ein Stausymbol dargeboten werden kann, ohne daß erste ein solches Verkehrszeichen passiert werden muß.

Diese erfindungsgemäße Möglichkeit die Verkehrszeichenerkennung temporär in ihrer Leistung zu variieren eröffnet die Möglichkeit, eine Erkennung von Verkehrszeichen ökonomisch zu realisieren. Es ist auch in vorteilhafter Weise nicht notwendig ein System bereitzustellen, welches im normalen Betrieb mangelhaft ausgelastet ist und nur in kritischen Situationen voll ausgelastet wird. Sondern es wird die Möglichkeit eröffnet, mittels moderner Mulitprozessor-Datenverarbeitung im Rückgriff auf die interne Fahrzeugdatenkommunikation und die in modernen Fahrzeugen in einer Vielzahl vorhandene Datenprozessoren, die momentan freie, nicht ausgenutzte Rechnerleistung für einen sinnvollen, ökonomischen Einsatz zu nutzen.

Ein weiteres vorteilhaftes Ausgestaltungsmerkmal der Erfindung besteht darin, daß in einem bereitgestellten Datenspeicher Informationen über die Art und/oder die Position und/oder den Zustand und/oder die Sichtbarkeit und/oder die Größe des erkannten Verkehrszeichens gespeichert wird. Dabei kann dieser Datenspeicher entweder dem kartenbasierten Navigationssystem bzw. dem Verkehrsinformationssystem zugeordnet sein, oder aber auch Bestandteil des Systems zur Verkehrszeichen Erkennung und/oder Anzeige sein. Durch die Kombination mit dieser Datenspeicherung kann der Beobachter durch ein akustisches oder optisches Signal darauf aufmerksam gemacht werden, dass sich entlang einer bereits einmal befahrenen Wegstrecke eine Änderung in Bezug auf die Position beziehungsweise des Vorhandenseins eines Verkehrszeichens ergeben hat. Dadurch ist es möglich einen Beobachter zum Beispiel auf baustellen-bedingte Verkehrsregelungen oder geänderte Vorfahrtsregelung im Kreuzungsbereich hinzuweisen. In vorteilhafterweise wird gleichermaßen der Beobachter auch dann einen Wamhinweis erhalten, wenn das System zur Verkehrszeichenerkennung ein tatsächlich vorhandenes Verkehrszeichen nicht erkennen oder nur ungenügend klassifizieren konnte.

Weiterhin wirkt sich bei der Erfindung positiv aus, daß auf Grundlage der kartenbasierten Positionsbestimmung die Möglichkeit eröffnet wird, ein Programm zur Anwendung einer Entscheidungslogik zu veranlassen, ein Verkehrszeichen so lange anzuzeigen, bis eine vorgegebene Wegstrecke zurückgelegt ist. Diese vorgegebene Wegstrecke ist vorzugsweise klassenspezifisch und kann durch eine Speichereinheit zur Verfügung gestellt werden. Es ist beispielsweise in der Bundesrepublik Deutschland eine Straßenauffahrt gleichbedeutend mit einer impliziten Aufhebung von Ge- und Verboten, wie Geschwindigkeitsbegrenzungen. Zudem müssen Geschwindigkeitsbegrenzungen nach spätestens 3 km erneuert werden, ansonsten gelten sie als aufgehoben. Durch dieses erfindungsgemäße Merkmal wird also erreicht, daß ein Verkehrszeichen, auch ohne explizite Aufhebung, nur so lange wie unbedingt notwendig angezeigt wird.

Besonders vorteilhaft wirkt sich die Erfindung in der Kombination mit einem System zur Verkehrszeichenerkennung aus, bei welchem die Bilddaten des Bildsensors in einer Informationsverarbeitungseinheit analysiert und klassifiziert und auf Grundlage des Ergebnisses einer Klassifikation Bildausschnitte und/oder in einer Speichereinheit gespeicherte, eine symbolische Darstellung repräsentierende Bilddaten in einer Speichereinheit ablegt und mittels einer Anzeigeeinheit darstellt. Hierbei wird im Rahmen der Analyse in der Informationsverarbeitungseinheit ermittelt, ob die Bilddaten des Bildsensors ein oder mehrere Objekte enthalten, welche mit hinreichender Wahrscheinlichkeit Verkehrszeichen sind. In Folge werden die so ermittelten Objekte einer Weiterverarbeitung und Klassifikation zugeführt. In besonders vorteilhafter Weise, wird im Rahmen der Erfindung bei der Weiterverarbeitung der Bilddaten der Objekte eine Separierung in verkehrszeichenspezifische Oberklassen und Unterklassen vorgenommen. Dabei werden entsprechende klassenspezifische Merkmalsdaten extrahiert und einer getrennten Klassifikation zugeführt. Abhängig davon ob die klassenspezifischen Merkmalsdaten bei der Klassifikation mit hoher Wahrscheinlichkeit korrekt erkannt wurden, werden sie durch entsprechende in einer Speichereinheit gespeicherte, die symbolische Darstellung repräsentierende Bilddaten oder durch die entsprechenden ursprüngliche vom Bildsensor stammenden Bilddaten ersetzt. Die aus dieser Ersetzung resultierenden Bilddaten werden zu einem synthetischen Bild eines Verkehrszeichens kombiniert und dieses Bild dann in der Speichereinheit gespeichert und mittels der Anzeigeeinheit zur Anzeige gebracht.

Ein wesentlicher Vorteil bei einem solchen System zur Verkehrszeichenerkennung besteht darin, daß mit ihr nicht mehr das rechenaufwendige und mit hohen Rückweisungsquoten behaftete Problem der Klassifikation eines in seiner Gesamtheit recht komplexen Verkehrszeichen gelöst werden muß, sondern das Problem wird durch die der Klassifikation vorangegangene Separierung der detektierten Objekte in verkehrszeichenspezifische Oberklassen und Unterklassen auf eindeutigere und somit einfachere Klassifikationsprobleme zurückgeführt. Hierbei werden gleichermaßen die Anforderungen an die notwendige Rechenleistung und Bildqualität reduziert.

Beispielhaft soll kurz anhand eines hier anhand eines Geschwindigkeitsbegrenzungszeichens die Aufteilung eines Verkehrszeichens in verkehrszeichenspezifische Oberklassen und Unterklassen erläutert werden. Die verkehrszeichenspezifische Oberklasse dieses Verkehrszeichen ist die Klasse der Verbotszeichen, welche als Merkmalsdaten eine Runde Form mit einem innenliegenden Symbol aufweisen. Im speziellen Fall eines Geschwindigkeitsbegrenzungszeichens ist das innenliegende Symbol eine Zahl welche von einem breiten, roten Ring umschlossen ist. Im Fall des Geschwindigkeitsbegrenzungszeichens ist das innenliegende Symbol, d.h. die Angabe auf welche Geschwindigkeit eine Fahrgeschwindigkeit zu begrenzen ist, ein Element der verkehrszeichenspezifischen Unterklasse.

Das System zur Verkehrszeichenerkennung, mit welchem vorteilhaft die Erfindung zur Leistungssteigerung eines Systems zur Erkennung und/oder Anzeige von Verkehrszeichen kombiniert werden kann, prüft mit vergleichsweise geringer Rechenleistung und geringem apparativen Aufwand (beispielsweise einer Monochromkamera anstatt einer hochauflösenden Farbkamera) in Echtzeit nach, ob es sich bei einem Objekt bestimmter Form innerhalb des aufgenommenen Bildes um ein Verkehrszeichen handelt. Ist dies der Fall, so werden die klassenspezifischen Merkmalsdaten des Objekts einer getrennten Klassifikation zur Identifikation des Verkehrszeichens zugeführt. In der Regel kommt hierbei ein hierarchisch organisierter Klassifikator zum Einsatz. Die Klassifikation erfolgt dabei in mehreren Stufen. Hierzu werden zuerst nur die der Oberklasse des Objektes zugehörigen Merkmalsdaten einer Klassifikation zugeführt. Bei erfolgreicher Klassifikation (d.h. die Klasse konnte mit hoher Wahrscheinlichkeit korrekt erkannt werden) werden die Merkmalsdaten durch die entsprechende in der Speichereinheit gespeicherte symbolische Darstellung der Oberklasse ersetzt. Blieb die Klassifikation erfolglos (d.h. die Klasse konnte nicht mit hoher Wahrscheinlichkeit korrekt erkannt werden) werden die Merkmalsdaten der Oberklasse und die Merkmalsdaten der Unterklasse durch die entsprechenden ursprünglichen vom Bildsensor stammenden Bilddaten ersetzt und die Klassifikationprozedur wird beendet. Ein weiterer Schritt innerhalb der Klassifikationsprozedur wird dann eingeleitet, wenn die Klassifikation der Oberklasse erfolgreich war. In diesem Fall werden nachfolgend die der Unterklasse des Objektes zugehörigen Merkmalsdaten einem Klassifikator zugeführt. Bei erfolgreicher Klassifikation dieser Unterklasse (d.h. die Klasse konnte mit hoher Wahrscheinlichkeit korrekt erkannt werden) werden die Merkmalsdaten durch die entsprechende in der Speichereinheit gespeicherte symbolische Darstellung der Unterklasse ersetzt. Andererseits werden bei erfolgloser Klassifikation (d.h. die Klasse konnte nicht mit hoher wahrscheinlichkeit korrekt erkannt werden) die Merkmalsdaten der Unterklasse durch die entsprechenden ursprünglichen vom Bildsensor stammenden Bilddaten ersetzt.

Mit diesem hierarchischen Vorgehen wird eine Verkehrszeichenerkennung mit geringer Rückweisungsquote zur Verfügung gestellt. Dabei können die beiden hierarchischen Stufen zur Identifikation der Oberklasse beziehungsweise zur Identifikation der Unterklasse selbst wieder hierarchisch organisiert sein. Bezüglich der Gestaltung der innerhalb der hierarchischen Klassifikation eingesetzten Klassifikatoren ist es denkbar, diese so zu gestalten, daß sie auf Grundlage eines Vergleichs von Distanzmaßen der ihnen gelieferten Merkmalsdaten von in der Speichereinheit gespeicherten klassentypischen Merkmalsdatensätzen entscheiden. Hierbei wird das als Verkehrszeichen identifizierte Objekt jener Oberklasse zugeordnet, zu welcher die Distanz im Merkmalsraum am geringsten ist. Es ist dabei möglich eine Toleranzschwelle zu definieren der mit dem minimalen Distanzwert verglichen wird, wobei das Unterschreiten des Toleranzwertes durch den Distanzwert als Hinweis auf eine mit hoher Wahrscheinlichkeit korrekt erfolgte Erkennung dient. In einer anderen vorteilhaften Ausgestaltung ist es auch möglich die Klassifikatoren so zu gestalten, daß sie mit Hilfe von verkehrszeichenspezifischen Lernstichproben trainiert werden können. Dieses Vorgehen ist besonders vorteilhaft, da die Qualität der von dem Bildsensor gelieferten Bilddaten stark von Umweltfaktoren wie Wetter und Lichtverhältnissen abhängig sind.

## Patentansprüche (Patentansprüche für folgende(n) Vertragsstaat(en): DE, FR, IT)

1. Verfahren zur Leistungssteigerung eines Systems zur Erkennung von Verkehrszeichen, welches eine Kamera und eine damit verbundene Auswerteeinheit zur Bilderkennung oder zur Bildanzeige aufweist, wobei
das System die von mindestens einem kartenbasierten Navigationssystem oder einem Verkehrsinformationssystem stammende Informationen bei der Erkennung oder der Anzeige von Inhalten von durch die Kamera aufgenommenen Verkehrszeichen ausnutzt, und wobei
das System zur Verkehrszeichenerkennung mit erhöhter Leistung zu arbeiten beginnt, wenn auf Grundlage von kartenbasierten Informationen bekannt wird, daß das Fahrzeug einen Bereich passiert, der bezüglich der Erkennung von Verkehrszeichen problematisch ist.

2. Verfahren nach Anspruch 1, **dadurch gekennzeichnet, daß** das System über einen Fahrzeugdatenbus mit den kartenbasierten Navigationssystemen oder den Verkehrsinformationssystemen kommuniziert.

3. Verfahren nach einem der Ansprüche 1 oder 2, **dadurch gekennzeichnet, daß** innerhalb problematischer Bereiche zusätzlich gesonderter Erkennungsaufwand betrieben wird, derart daß
a) im Bereich von Ortseingängen und Ortsausgängen, gesondert nach Ortseingangs- und Ortsausgangstafeln gesucht wird,
b) im Bereich von Verkehrsbeeinflussungsanlagen, Wechselschildern oder Ampeln, gesondert auf einen Wechsel der Art und Weise der Ausprägung des Verkehrszeichen geachtet wird,
c) in einem Bereich, in welchem schlechte Sicht durch Nebel oder Regen vorherrscht verstärkt mit kontrastarmen Bilddaten gerechnet wird und dadurch vorzugsweise verstärkt auf eine Kontrastverbesserung der Bilddaten hingewirkt wird.

4. Verfahren nach einem der vorhergehenden Ansprüche, **dadurch gekennzeichnet, daß** in einem dem kartenbasierten Navigationssystem beziehungsweise dem Verkehrsinformationssystem beigestellten Datenspeicher zumindest ein ein erkanntes Verkehrszeichen beschreibender Parameter, wie dessen Art oder dessen Position oder dessen Zustand oder dessen Sichtbarkeit oder dessen Größe, gespeichert wird.

5. Verfahren nach einem der vorhergehenden Ansprüche, **dadurch gekennzeichnet, daß** in einem dem System zur Erkennung von Verkehrszeichen beigestellten Datenspeicher zumindest ein ein erkanntes Verkehrszeichen beschreibender Parameter, wie dessen Art oder dessen Position oder dessen Zustand oder dessen Sichtbarkeit oder dessen Größe, gespeichert wird.

6. Verfahren nach einem der Ansprüche 4 oder 5, **dadurch gekennzeichnet, daß** mittels eines in der Anzeigeeinheit enthaltenen Signalgebers ein akustisches oder optisches Signal ausgegeben wird, wenn sich entlang einer bereits einmal befahrenen Wegstecke eine Änderung bzgl. der Position beziehungsweise des Vorhandenseins eines Verkehrszeichens ergibt.

7. Verfahren nach einem der vorhergehend Ansprüche, **dadurch gekennzeichnet, daß** ausgehend von den kartenbasierten Navigationssystemen oder den Verkehrsinformationssystemen ein Programm zur Anwendung einer Entscheidungslogik derart gesteuert wird, daß das Bild eines Verkehrszeichens solange angezeigt wird, bis eine vorgegebene Wegstrecke zurückgelegt ist, welche vorzugsweise klassenspezifisch ist

8. Verfahren nach Anspruch 7, **dadurch gekennzeichnet, daß** die vorgegebenen Wegstrecken durch eine Speichereinheit zur Verfügung gestellt werden.

9. Verfahren nach einem der vorhergehenden Ansprüche, **dadurch gekennzeichnet, daß** das System zur Erkennung von Verkehrszeichen bei der Verarbeitung von durch einen Bildsensor gelieferten Bilddaten, diese auf das Vorhandensein von Verkehrszeichen untersucht, diese sodann extrahiert, in Ober- und Unterklassen separiert und in diesem Zusammenhang klas senspezifische Merkmalsdaten extrahiert, welche dann einer getrennten Klassifikation zugeführt werden.

10. Verfahren nach Anspruch 9, **dadurch gekennzeichnet, daß** diese Klassifikation hierarchisch, in mehreren Klassifikationsstufen erfolgt.

11. Verfahren nach Anspruch 10, **dadurch gekennzeichnet, daß** die Klassifikationsstufen wie folgt gegliedert sind:
a) zuerst werden nur die der Oberklasse des Objektes zugehörigen Merkmalsdaten einem Klassifikator zugeführt ,
aa) bei erfolgreicher Klassifikation, bei welcher die Klasse mit hoher Wahrscheinlichkeit korrekt erkannt werden konnte, werden die Merkmalsdaten durch die entsprechende in der Speichereinheit gespeicherte symbolische Darstellung der Oberklasse ersetzt.
ab) bei erfolgloser Klassifikation, bei welcher die Klasse nicht mit hoher Wahrscheinlichkeit korrekt erkannt werden konnte, werden die Merkmalsdaten der Oberklasse und die Merkmalsdaten der Unterklasse durch die entsprechenden ursprünglichen vom Bildsensor stammenden Bilddaten ersetzt.
b) war die Klassifikation der Oberklasse erfolgreich, werden nachfolgend die der Unterklasse des Objektes zugehörigen Merkmalsdaten einem Klassifikator zugeführt,
ba) bei erfolgreicher Klassifikation, bei welcher die Klasse mit hoher Wahrscheinlichkeit korrekt erkannt werden konnte, werden die Merkmalsdaten durch die entsprechende in der Speichereinheit gespeicherte symbolische Darstellung der Unterklasse ersetzt.
bb) bei erfolgloser Klassifikation, bei welcher die Klasse nicht mit hoher wahrscheinlichkeit korrekt erkannt werden konnte, werden die Merkmalsdaten der Unterklasse durch die entsprechenden ursprünglichen vom Bildsensor stammenden Bilddaten ersetzt.

12. Vorrichtung zur Leistungssteigerung eines Systems zur Erkennung von Verkehrszeichen, welches eine Kamera und eine damit verbundene Auswerteeinheit zur Bilderkennung oder zur Bildanzeige aufweist, wobei
das System mit mindestens einem kartenbasierten Navigationssystem oder einem Verkehrsinformationssystemen verbunden ist, um von ihnen stammende Informationen bei der Erkennung oder der Anzeige von Inhalten von durch die Kamera aufgenommenen Verkehrszeichen ausnutzt, und wobei
das System zur Verkehrszeichenerkennung so ausgestaltet ist, dass es mit erhöhter Leistung zu arbeiten in der Lage ist, wenn auf Grundlage von kartenbasierten Informationen bekannt wird, daß das Fahrzeug einen Bereich passiert, der bezüglich der Erkennung von Verkehrszeichen problematisch ist.

13. Vorrichtung nach Anspruch 12, **dadurch gekennzeichnet, daß** eine Verbindung über einen Fahrzeugdatenbus zwischen dem System den kartenbasierten Navigationssystemen und/oder Verkehrsinformationssystemen besteht.

14. Vorrichtung nach einem der vorhergehenden Ansprüche, **dadurch gekennzeichnet, daß** dem kartenbasierten Navigationssystem beziehungsweise dem Verkehrsinformationssystem ein Datenspeicher bereitgestellt ist, in welchem zumindest ein ein erkanntes Verkehrszeichen beschreibender Parameter, wie dessen Art oder dessen Position oder dessen Zustand oder dessen Sichtbarkeit oder dessen Größe, gespeichert wird.

15. Vorrichtung nach einem der vorhergehenden Ansprüche, **dadurch gekennzeichnet, daß** dem System zur Erkennung von Verkehrszeichen ein Datenspeicher bereitgestellt ist, in weichem zumindest ein ein erkanntes Verkehrszeichen beschreibender Parameter, wie dessen Art oder dessen Position oder dessen Zustand oder dessen Sichtbarkeit oder dessen Größe, gespeichert wird.

16. Vorrichtung nach einem der Ansprüche 14 oder 15, **dadurch gekennzeichnet, daß** die Anzeigeeinheit einen Signalgebers umfaßt, welcher ein akustisches oder optisches Signal ausgibt, wenn sich entlang einer bereits einmal befahrenen Wegstecke eine Änderung bzgl. der Position beziehungsweise des Vorhandenseins eines Verkehrszeichens ergibt.

17. Vorrichtung nach einem der vorhergehend Ansprüche, **dadurch gekennzeichnet, daß** ein Programm zur Anwendung einer Entscheidungslogik in dem System ausgebildet ist, welches ausgehend von den kartenbasierten Navigationssystemen oder den Verkehrsinformationssystemen das Bild eines Verkehrszeichens solange angezeigt, bis eine vorgegebene Wegstrecke zurückgelegt ist, welche vorzugsweise klassenspezifisch ist.

18. Vorrichtung nach Anspruch 16, **dadurch gekennzeichnet, daß** eine Speichereinheit in dem System ausgebildet ist, in der die vorgegebenen Wegstrecken gespeichert sind und durch welche sie einer Verarbeitung zugänglich gemacht werden.

19. Vorrichtung nach einem der vorhergehenden Ansprüche, **dadurch gekennzeichnet, daß** in dem System zur Erkennung von Verkehrszeichen eine Verarbeitungseinrichtung ausgebildet ist, welche die durch einen Bildsensor gelieferten Bilddaten diese auf das Vorhandensein von Verkehrszeichen untersucht, diese sodann extrahiert, in Ober- und Unterklassen separiert und in diesem Zusammenhang klassenspezifische Merkmalsdaten extrahiert und getrennt einem Klassifikator zuführt.

20. Vorrichtung nach Anspruch 21, **dadurch gekennzeichnet, daß** dieser Klassifikator hierarchisch, in mehreren Klassifikationsstufen aufgebaut ist.

21. Vorrichtung nach Anspruch 22, **dadurch gekennzeichnet, daß** die Klassifikationsstufen so aufgebaut sind, daß der Klassifikator die nachfolgende Funktionalitäten erfüllt:
a) zuerst werden nur die der Oberklasse des Objektes zugehörigen Merkmalsdaten einem Klassifikator zugeführt ,
aa) bei erfolgreicher Klassifikation, bei welcher die Klasse mit hoher Wahrscheinlichkeit korrekt erkannt werden konnte, werden die Merkmalsdaten durch die entsprechende in der Speichereinheit gespeicherte symbolische Darstellung der Oberklasse ersetzt.
ab) bei erfolgloser Klassifikation, bei welcher die Klasse nicht mit hoher Wahrscheinlichkeit korrekt erkannt werden konnte, werden die Merkmalsdaten der Oberklasse und die Merkmalsdaten der Unterklasse durch die entsprechenden ursprünglichen vom Bildsensor stammenden Bilddaten ersetzt.
b) war die Klassifikation der Oberklasse erfolgreich, werden nachfolgend die der Unterklasse des Objektes zugehörigen Merkmalsdaten einem Klassifikator zugeführt,
ba) bei erfolgreicher Klassifikation, bei welcher die Klasse mit hoher Wahrscheinlichkeit korrekt erkannt werden konnte, werden die Merkmalsdaten durch die entsprechende in der Speichereinheit gespeicherte symbolische Darstellung der Unterklasse ersetzt.
bb) bei erfolgloser Klassifikation, bei welcher die Klasse konnte nicht mit hoher Wahrscheinlichkeit korrekt erkannt werdenkonnte, werden die Merkmalsdaten der Unterklasse durch die entsprechenden ursprünglichen vom Bildsensor stammenden Bilddaten ersetzt.

## Patentansprüche (Patentansprüche für folgende(n) Vertragsstaat(en): GB)

1. Verfahren zur Leistungssteigerung eines Systems zur Erkennung von Verkehrszeichen, welches eine Kamera und eine damit verbundene Auswerteeinheit zur Bilderkennung oder zur Bildanzeige aufweist,
**dadurch gekennzeichnet, daß**
das System die von mindestens einem kartenbasierten Navigationssystem oder einem Verkehrsinformationssystem stammende Informationen bei der Erkennung oder der Anzeige von Inhalten von durch die Kamera aufgenommenen Verkehrszeichen ausnutzt.

2. Verfahren nach Anspruch 1, **dadurch gekennzeichnet, daß** das System über einen Fahrzeugdatenbus mit den kartenbasierten Navigationssystemen oder den Verkehrsinformationssystemen kommuniziert.

3. Verfahren nach Anspruch 1 oder 2, **dadurch gekennzeichnet, daß** das System zur Verkehrszeichenerkennung mit erhöhter Leistung zu arbeiten beginnt, wenn auf Grundlage von kartenbasierten Informationen bekannt wird, daß das Fahrzeug einen Bereich passiert, der bezüglich der Erkennung von Verkehrszeichen problematisch ist.

4. Verfahren nach einem der Ansprüche 1 bis 3, **dadurch gekennzeichnet, daß** innerhalb problematischer Bereiche zusätzlich gesonderter Erkennungsaufwand betrieben wird, derart daß
a) im Bereich von Ortseingängen und Ortsausgängen, gesondert nach Ortseingangsund Ortsausgangstafeln gesucht wird,
b) im Bereich von Verkehrsbeeinflussungsanlagen, Wechselschildern oder Ampeln, gesondert auf einen Wechsel der Art und Weise der Ausprägung des Verkehrszeichen geachtet wird,
c) in einem Bereich, in welchem schlechte Sicht durch Nebel oder Regen vorherrscht verstärkt mit kontrastarmen Bilddaten gerechnet wird und dadurch vorzugsweise verstärkt auf eine Kontrastverbesserung der Bilddaten hingewirkt wird.

5. Verfahren nach einem der vorhergehenden Ansprüche, **dadurch gekennzeichnet, daß** in einem dem kartenbasierten Navigationssystem beziehungsweise dem Verkehrsinformationssystem beigestellten Datenspeicher zumindest ein ein erkanntes Verkehrszeichen beschreibender Parameter, wie dessen Art oder dessen Position oder dessen Zustand oder dessen Sichtbarkeit oder dessen Größe, gespeichert wird.

6. Verfahren nach einem der vorhergehenden Ansprüche, **dadurch gekennzeichnet, daß** in einem dem System zur Erkennung von Verkehrszeichen beigestellten Datenspeicher zumindest ein ein erkanntes Verkehrszeichen beschreibender Parameter, wie dessen Art oder dessen Position oder dessen Zustand oder dessen Sichtbarkeit oder dessen Größe, gespeichert wird.

7. Verfahren nach einem der Ansprüche 5 oder 6, **dadurch gekennzeichnet, daß** mittels eines in der Anzeigeeinheit enthaltenen Signalgebers ein akustisches oder optisches Signal ausgegeben wird, wenn sich entlang einer bereits einmal befahrenen Wegstecke eine Änderung bzgl. der Position beziehungsweise des Vorhandenseins eines Verkehrszeichens ergibt.

8. Verfahren nach einem der vorhergehend Ansprüche, **dadurch gekennzeichnet, daß** ausgehend von den kartenbasierten Navigationssystemen oder den Verkehrsinformationssystemen ein Programm zur Anwendung einer Entscheidungslogik derart gesteuert wird, daß das Bild eines Verkehrszeichens solange angezeigt wird, bis eine vorgegebene Wegstrecke zurückgelegt ist, welche vorzugsweise klassenspezifisch ist.

9. Verfahren nach Anspruch 8, **dadurch gekennzeichnet, daß** die vorgegebenen Wegstrecken durch eine Speichereinheit zur Verfügung gestellt werden.

10. Verfahren nach einem der vorhergehenden Ansprüche, **dadurch gekennzeichnet, daß** das System zur Erkennung von Verkehrszeichen bei der Verarbeitung von durch einen Bildsensor gelieferten Bilddaten, diese auf das Vorhandensein von Verkehrszeichen untersucht, diese sodann extrahiert, in Ober- und Unterklassen separiert und in diesem Zusammenhang klassenspezifische Merkmalsdaten extrahiert, welche dann einer getrennten Klassifikation zugeführt werden.

11. Verfahren nach Anspruch 10, **dadurch gekennzeichnet, daß** diese Klassifikation hierarchisch, in mehreren Klassifikationsstufen erfolgt.

12. Verfahren nach Anspruch 11, **dadurch gekennzeichnet, daß** die Klassifikationsstufen wie folgt gegliedert sind:
a) zuerst werden nur die der Oberklasse des Objektes zugehörigen Merkmalsdaten einem Klassifikator zugeführt ,
aa) bei erfolgreicher Klassifikation, bei welcher die Klasse mit hoher Wahrscheinlichkeit korrekt erkannt werden konnte, werden die Merkmalsdaten durch die entsprechende in der Speichereinheit gespeicherte symbolische Darstellung der Oberklasse ersetzt.
ab) bei erfolgloser Klassifikation, bei welcher die Klasse nicht mit hoher Wahrscheinlichkeit korrekt erkannt werden konnte, werden die Merkmalsdaten der Oberklasse und die Merkmalsdaten der Unterklasse durch die entsprechenden ursprünglichen vom Bildsensor stammenden Bilddaten ersetzt.
b) war die Klassifikation der Oberklasse erfolgreich, werden nachfolgend die der Unterklasse des Objektes zugehörigen Merkmalsdaten einem Klassifikator zugeführt,
ba) bei erfolgreicher Klassifikation, bei welcher die Klasse mit hoher Wahrscheinlichkeit korrekt erkannt werden konnte, werden die Merkmalsdaten durch die entsprechende in der Speichereinheit gespeicherte symbolische Darstellung der Unterklasse ersetzt.
bb) bei erfolgloser Klassifikation, bei weicher die Klasse nicht mit hoher wahrscheinlichkeit korrekt erkannt werden konnte, werden die Merkmalsdaten der Unterklasse durch die entsprechenden ursprünglichen vom Bildsensor stammenden Bilddaten ersetzt.

13. Vorrichtung zur Leistungssteigerung eines Systems zur Erkennung von Verkehrszeichen, welches eine Kamera und eine damit verbundene Auswerteeinheit zur Bilderkennung oder zur Bildanzeige aufweist,
**dadurch gekennzeichnet, daß**
das System mit mindestens einem kartenbasierten Navigationssystem oder einem Verkehrsinformationssystemen verbunden ist, um von ihnen stammende informationen bei der Erkennung oder der Anzeige von Inhalten von durch die Kamera aufgenommenen Verkehrszeichen ausnutzt.

14. Vorrichtung nach Anspruch 13, **dadurch gekennzeichnet, daß** eine Verbindung über einen Fahrzeugdatenbus zwischen dem System den kartenbasierten Navigationssystemen und/oder Verkehrsinformationssystemen besteht.

15. Vorrichtung nach Anspruch 13 oder 14, **dadurch gekennzeichnet, daß** das Systems zur Verkehrszeichenerkennung die Fähigkeit aufweist mit erhöhter Leistung zu arbeiten, wenn auf Grundlage von kartenbasierten Informationen bekannt wird, daß das Fahrzeug einen Bereich passiert, der bezüglich der Erkennung von Verkehrszeichen problematisch ist.

16. Vorrichtung nach einem der vorhergehenden Ansprüche, **dadurch gekennzeichnet, daß** dem kartenbasierten Navigationssystem beziehungsweise dem Verkehrsinformationssystem ein Datenspeicher bereitgestellt ist, in welchem zumindest ein ein erkanntes Verkehrszeichen beschreibender Parameter, wie dessen Art oder dessen Position oder dessen Zustand oder dessen Sichtbarkeit oder dessen Größe, gespeichert wird.

17. Vorrichtung nach einem der vorhergehenden Ansprüche, **dadurch gekennzeichnet, daß** dem System zur Erkennung von Verkehrszeichen ein Datenspeicher bereitgestellt ist, in welchem zumindest ein ein erkanntes Verkehrszeichen beschreibender Parameter, wie dessen Art oder dessen Position oder dessen Zustand oder dessen Sichtbarkeit oder dessen Größe, gespeichert wird.

18. Vorrichtung nach einem der Ansprüche 16 oder 17, **dadurch gekennzeichnet, daß** die Anzeigeeinheit einen Signalgebers umfaßt, welcher ein akustisches oder optisches Signal ausgibt, wenn sich entlang einer bereits einmal befahrenen Wegstecke eine Änderung bzgl. der Position beziehungsweise des Vorhandenseins eines Verkehrszeichens ergibt.

19. Vorrichtung nach einem der vorhergehend Ansprüche, **dadurch gekennzeichnet, daß** ein Programm zur Anwendung einer Entscheidungslogik in dem System ausgebildet ist, welches ausgehend von den kartenbasierten Navigationssystemen oder den Verkehrsinformationssystemen das Bild eines Verkehrszeichens solange angezeigt, bis eine vorgegebene Wegstrecke zurückgelegt ist, weiche vorzugsweise klassenspezifisch ist.

20. Vorrichtung nach Anspruch 16, **dadurch gekennzeichnet, daß** eine Speichereinheit in dem System ausgebildet ist, in der die vorgegebenen Wegstrecken gespeichert sind und durch welche sie einer Verarbeitung zugänglich gemacht werden.

21. Vorrichtung nach einem der vorhergehenden Ansprüche, **dadurch gekennzeichnet, daß** in dem System zur Erkennung von Verkehrszeichen eine Verarbeitungseinrichtung ausgebildet ist, welche die durch einen Bildsensor gelieferten Bilddaten diese auf das Vorhandensein von Verkehrszeichen untersucht, diese sodann extrahiert, in Ober- und Unterklassen separiert und in diesem Zusammenhang klassenspezifische Merkmalsdaten extrahiert und getrennt einem Klassifikator zuführt.

22. Vorrichtung nach Anspruch 21, **dadurch gekennzeichnet, daß** dieser Klassifikator hierarchisch, in mehreren Klassifikationsstufen aufgebaut ist.

23. Vorrichtung nach Anspruch 22, **dadurch gekennzeichnet, daß** die Klassifikationsstufen so aufgebaut sind, daß der Klassifikator die nachfolgende Funktionalitäten erfüllt:
a) zuerst werden nur die der Oberklasse des Objektes zugehörigen Merkmalsdaten einem Klassifikator zugeführt ,
aa) bei erfolgreicher Klassifikation, bei welcher die Klasse mit hoher Wahrscheinlichkeit korrekt erkannt werden konnte, werden die Merkmalsdaten durch die entsprechende in der Speichereinheit gespeicherte symbolische Darstellung der Oberklasse ersetzt.
ab) bei erfolgloser Klassifikation, bei welcher die Klasse nicht mit hoher Wahrscheinlichkeit korrekt erkannt werden konnte, werden die Merkmalsdaten der Oberklasse und die Merkmalsdaten der Unterklasse durch die entsprechenden ursprünglichen vom Bildsensor stammenden Bilddaten ersetzt.
b) war die Klassifikation der Oberklasse erfolgreich, werden nachfolgend die der Unterklasse des Objektes zugehörigen Merkmalsdaten einem Klassifikator zugeführt,
ba) bei erfolgreicher Klassifikation, bei welcher die Klasse mit hoher Wahrscheinlichkeit korrekt erkannt werden konnte, werden die Merkmalsdaten durch die entsprechende in der Speichereinheit gespeicherte symbolische Darstellung der Unterklasse ersetzt.
bb) bei erfolgloser Klassifikation, bei welcher die Klasse konnte nicht mit hoher Wahrscheinlichkeit korrekt erkannt werdenkonnte, werden die Merkmalsdaten der Unterklasse durch die entsprechenden ursprünglichen vom Bildsensor stammenden Bilddaten ersetzt.

## Claims (Claims for the following Contracting State(s): GR, FR, IT)

1. Method for increasing the power of a system for recognizing road signs which has a camera and an evaluation unit connected thereto for recognizing images or for displaying images, the system utilizing the information originating from at least one map-based navigation system or a traffic information system for recognizing or displaying contents of road signs photographed by the camera, and the system for recognizing road signs starting to operate with increased power if it becomes known, on the basis of map-based information, that the vehicle is passing through an area which is problematic in terms of the recognition of road signs.

2. Method according to Claim 1, **characterized in that** the system communicates with the map-based navigation systems or the traffic information systems via a vehicle data bus.

3. Method according to one of Claims 1 or 2, **characterized in that**, within problematic areas, separate recognition expenditure is additionally made in such a way that
a) in the region of entrances to localities and exits from localities there is separate searching for locality entrance signs and locality exit signs,
b) in the region of traffic control systems, alternating signs or traffic lights, attention is paid separately to a changeover in the way in which the road sign is expressed,
c) in a region in which visibility is poor as a result of fog or rain, low-contrast image data is increasingly expected and as a result preferably greater efforts are made at improving the contrast of the image data.

4. Method according to one of the preceding claims, **characterized in that** at least one parameter which describes a recognized road sign, such as the road sign's type or its position or its state or its visibility or its size, is stored in a data memory which is made available to the map-based navigation system or the traffic information system.

5. Method according to one of the preceding claims, **characterized in that** at least one parameter which describes a recognized road sign, such as the road signs type or its position or its state or its visibility or its size, is stored in a data memory which is made available to the system for recognizing road signs.

6. Method according to one of Claims 4 or 5, **characterized in that** an audible or visual signal is output by means of a signal generator contained in the display unit if a change in terms of the position or the presence of a road sign occurs along a distance which has already been travelled along once.

7. Method according to one of the preceding claims, **characterized in that** a program for applying a decision logic is controlled on the basis of the map-based navigation systems or the traffic information systems in such a way that the image of a road sign is displayed until a predefined distance, which is preferably class-specific, is covered.

8. Method according to Claim 7, **characterized in that** the predefined distances are made available by means of a memory unit.

9. Method according to one of the preceding claims, **characterized in that** the system for recognizing road signs examines image data for the presence of road signs during the processing of image data supplied by an image sensor, then extracts said image data, separates it into upper classes and lower classes and in this context extracts class-specific feature data which is then fed to a separate classification.

10. Method according to Claim 9, **characterized in that** this classification takes place hierarchically, in a plurality of classification stages.

11. Method according to Claim 10, **characterized in that** the classification stages are divided up as follows:
a) firstly, only the feature data which is associated with the upper class of the object is fed to a classifier,
aa) in the event of successful classification during which there was a high probability that the class could be recognized correctly, the feature data is replaced by the corresponding symbolic representation of the upper class which is stored in the memory unit.
ab) in the case of unsuccessful classification during which there was a high probability that the class could not be recognized correctly, the feature data of the upper class and the feature data of the lower class are replaced by the corresponding original image data originating from the image sensor.
b) if the classification of the upper class was successful, the feature data which is associated with the lower class of the object is subsequently fed to a classifier,
ba) in the event of successful classification during which there was a high probability that the class could be recognized correctly, the feature data is replaced by the corresponding symbolic representation of the lower class which is stored in the memory unit.
bb) in the event of unsuccessful classification during which there was a high probability that the class could not be recognized correctly, the feature data of the lower class is replaced by the corresponding original image data originating from the image sensor.

12. Device for increasing the power of a system for recognizing road signs which has a camera and an evaluation unit connected thereto for recognizing images or for displaying images, the system being connected to at least one map-based navigation system or traffic information system in order to utilize information originating from the latter for recognizing or displaying contents of road signs photographed by the camera, and the system for recognizing road signs being configured in such a way that it is capable of operating with increased power if it becomes known, on the basis of map-based information, that the vehicle is passing through an area which is problematic in terms of the recognition of road signs.

13. Device according to Claim 12, **characterized in that** there is a connection between the system, the map-based navigation systems and/or traffic information systems via a vehicle data bus.

14. Device according to one of the preceding claims, **characterized in that** a data memory, in which at least one parameter which describes a recognized road sign, such as the road sign's type or its position or its state or its visibility or its size, is stored, is made available to the map-based navigation system or the traffic information system.

15. Device according to one of the preceding claims, **characterized in that** a data memory, in which at least one parameter which describes a recognized road sign, such as the road sign's type or its position or its state or its visibility or its size, is stored, is made available to the system for recognizing road signs.

16. Device according to one of Claims 14 or 15, **characterized in that** the display unit comprises a signal generator which outputs an audible or visual signal if a change in terms of the position or the presence of a road sign occurs along a distance which has already been travelled along once.

17. Device according to one of the preceding claims, **characterized in that** a program is formed for applying a decision logic in the system, which program displays the image of a road sign on the basis of the map-based navigation systems or the traffic information systems until a predefined distance which is preferably class-specific is covered.

18. Device according to Claim 16, **characterized in that** a memory unit is formed in the system, in which unit the predefined distances are stored and by means of which they are made available to processing means.

19. Device according to one of the preceding claims, **characterized in that** a processing device which examines the image data supplied by an image sensor for the presence of road signs, then extracts said image data separates it into upper classes and lower classes and extracts feature data which is class-specific in this context, and feeds it separately to a classifier is formed in the system for recognizing road signs.

20. Device according to Claim 21, **characterized in that** this classifier is hierarchically structured, in a plurality of classification stages.

21. Device according to Claim 22, **characterized in that** the classification stages are constructed in such a way that the classifier fulfils the following functionalities:
a) firstly, only the feature data which is associated with the upper class of the object is fed to a classifier,
aa) in the event of successful classification during which there was a high probability that the class could be recognized correctly, the feature data is replaced by the corresponding symbolic representation of the upper class which is stored in the memory unit.
ab) in the case of unsuccessful classification during which there was a high probability that the class could not be recognized correctly, the feature data of the upper class and the feature data of the lower class are replaced by the corresponding original image data originating from the image sensor.
b) if the classification of the upper class was successful, the feature data which is associated with the lower class of the object is subsequently fed to a classifier,
ba) in the event of successful classification during which there was a high probability that the class could be recognized correctly, the feature data is replaced by the corresponding symbolic representation of the lower class which is stored in the memory unit.
bb) in the event of unsuccessful classification during which there was a high probability that the class could not be recognized correctly, the feature data of the lower class is replaced by the corresponding original image data originating from the image sensor.

## Claims (Claims for the following Contracting State(s): GR)

1. Method for increasing the power of a system for recognizing road signs which has a camera and an evaluation unit connected thereto for recognizing images or for displaying images, **characterized in that** the system uses the information originating from at least one map-based navigation system or a traffic information system for recognizing or displaying contents of road signs photographed by the camera.

2. Method according to Claim 1, **characterized in that** the system communicates with the map-based navigation systems or the traffic information systems via a vehicle data bus.

3. Method according to Claim 1 or 2, **characterized in that** the system for recognizing road signs begins to operate with increased power if it becomes known, on the basis of map-based information, that the vehicle is passing through an area which is problematic in terms of the recognition of road signs.

4. Method according to one of Claims 1 to 3, **characterized in that**, within problematic areas, separate recognition expenditure is additionally made in such a way that
a) in the region of entrances to localities and exits from localities there is separate searching for locality entrance signs and locality exit signs,
b) in the region of traffic control systems, alternating signs or traffic lights, attention is paid separately to a changeover in the way in which the road sign is expressed,
c) in a region in which visibility is poor as a result of fog or rain, low-contrast image data is increasingly expected and as a result preferably greater efforts are made at improving the contrast of the image data.

5. Method according to one of the preceding claims, **characterized in that** at least one parameter which describes a recognized road sign, such as the road sign's type or its position or its state or its visibility or its size, is stored in a data memory which is made available to the map-based navigation system or the traffic information system.

6. Method according to one of the preceding claims, **characterized in that** at least one parameter which describes a recognized road sign, such as the road sign's type or its position or its state or its visibility or its size, is stored in a data memory which is made available to the system for recognizing road signs.

7. Method according to one of Claims 5 or 6, **characterized in that** an audible or visual signal is output by means of a signal generator contained in the display unit if a change in terms of the position or the presence of a road sign occurs along a distance which has already been travelled along once.

8. Method according to one of the preceding claims, **characterized in that** a program for applying a decision logic is controlled on the basis of the map-based navigation systems or the traffic information systems in such a way that the image of a road sign is displayed until a predefined distance, which is preferably class-specific, is covered.

9. Method according to Claim 8, **characterized in that** the predefined distances are made available by means of a memory unit.

10. Method according to one of the preceding claims, **characterized in that** the system for recognizing road signs examines image data for the presence of road signs during the processing of image data supplied by an image sensor, then extracts said image data, separates it into upper classes and lower classes and in this context extracts class-specific feature data which is then fed to a separate classification.

11. Method according to Claim 10, **characterized in that** this classification takes place hierarchically, in a plurality of classification stages.

12. Method according to Claim 11, **characterized in that** the classification stages are divided up as follows:
a) firstly, only the feature data which is associated with the upper class of the object is fed to a classifier,
aa) in the event of successful classification during which there was a high probability that the class could be recognized correctly, the feature data is replaced by the corresponding symbolic representation of the upper class which is stored in the memory unit.
ab) in the case of unsuccessful classification during which there was a high probability that the class could not be recognized correctly, the feature data of the upper class and the feature data of the lower class are replaced by the corresponding original image data originating from the image sensor.
b) if the classification of the upper class was successful, the feature data which is associated with the lower class of the object is subsequently fed to a classifier,
ba) in the event of successful classification during which there was a high probability that the class could be recognized correctly, the feature data is replaced by the corresponding symbolic representation of the lower class which is stored in the memory unit.
bb) in the event of unsuccessful classification during which there was a high probability that the class could not be recognized correctly, the feature data of the lower class is replaced by the corresponding original image data originating from the image sensor.

13. Device for increasing the power of a system for recognizing road signs which has a camera and an evaluation unit connected thereto for recognizing images or for displaying images, **characterized in that** the system is connected to at least one map-based navigation system or traffic information system in order to utilize information originating from the latter for recognizing or displaying contents of road signs photographed by the camera.

14. Device according to Claim 13, **characterized in that** there is a connection between the system, the map-based navigation systems and/or traffic information systems via a vehicle data bus.

15. Device according to Claim 13 or 14, **characterized in that** the system for recognizing road signs is capable of operating with increased power if it becomes known, on the basis of map-based information, that the vehicle is passing through an area which is problematic in terms of the recognition of road signs.

16. Device according to one of the preceding claims, **characterized in that** a data memory, in which at least one parameter which describes a recognized road sign, such as the road sign's type or its position or its state or its visibility or its size, is stored, is made available to the map-based navigation system or the traffic information system.

17. Device according to one of the preceding claims, **characterized in that** a data memory, in which at least one parameter which describes a recognized road sign, such as the road sign's type or its position or its size, is stored, or its visibility or its magnitude is made available to the system for recognizing road signs.

18. Device according to one of Claims 16 or 17, **characterized in that** the display unit comprises a signal generator which outputs an audible or visual signal if a change in terms of the position or the presence of a road sign occurs along a distance which has already been travelled along once.

19. Device according to one of the preceding claims, **characterized in that** a program is formed for applying a decision logic in the system, which program displays the image of a road sign on the basis of the map-based navigation systems or the traffic information systems until a predefined distance which is preferably class-specific is covered.

20. Device according to Claim 16, **characterized in that** a memory unit is formed in the system, in which unit the predefined distances are stored and by means of which they are made available to processing means.

21. Device according to one of the preceding claims, **characterized in that** a processing device which examines the image data supplied by an image sensor for the presence of road signs, then extracts said image data, separates it into upper classes and lower classes and extracts feature data which is class-specific in this context, and feeds it separately to a classifier is formed in the system for recognizing road signs.

22. Device according to Claim 21, **characterized in that** this classifier is hierarchically structured, in a plurality of classification stages.

23. Device according to Claim 22, **characterized in that** the classification stages are constructed in such a way that the classifier fulfils the following functionalities:
a) firstly, only the feature data which is associated with the upper class of the object is fed to a classifier,
aa) in the event of successful classification during which there was a high probability that the class could be recognized correctly, the feature data is replaced by the corresponding symbolic representation of the upper class which is stored in the memory unit.
ab) in the case of unsuccessful classification during which there was a high probability that the class could not be recognized correctly, the feature data of the upper class and the feature data of the lower class are replaced by the corresponding original image data originating from the image sensor.
b) if the classification of the upper class was successful, the feature data which is associated with the lower class of the object is subsequently fed to a classifier,
ba) in the event of successful classification during which there was a high probability that the class could be recognized correctly, the feature data is replaced by the corresponding symbolic representation of the lower class which is stored in the memory unit.
bb) in the event of unsuccessful classification during which there was a high probability that the class could not be recognized correctly, the feature data of the lower class is replaced by the corresponding original image data originating from the image sensor.

## Revendications (Revendications pour l'(les) Etat(s) contractant(s) suivant(s): GR, FR, IT)

1. Procédé pour l'accroissement de puissance d'un système de reconnaissance de signalisation du trafic, lequel présente une caméra et un module d'analyse relié à celle-ci pour reconnaître l'image ou pour afficher l'image, le système utilisant des informations provenant au moins d'un système de navigation à base de cartes ou d'un système d'information de trafic lors de la reconnaissance ou de l'affichage des contenus de la signalisation du trafic enregistrée par la caméra et le système de reconnaissance de signalisation de trafic commençant à fonctionner avec une puissance accrue lorsque les informations basées sur les cartes l'amènent à constater que le véhicule traverse une zone qui pose des problèmes au niveau de la reconnaissance de la signalisation de trafic.

2. Procédé selon la revendication 1, **caractérisé en ce que** le système communique avec les systèmes de navigation à base de cartes ou les systèmes d'information de trafic par le biais d'un bus de données du véhicule.

3. Procédé selon l'une des revendications 1 ou 2, **caractérisé en ce qu'**un effort de reconnaissance supplémentaire particulier est développé à l'intérieur des zones qui posent des problèmes de telle manière que
a) dans la zone des entrées d'agglomération et des sorties d'agglomération, une recherche de panneaux d'entrée d'agglomération et de sortie d'agglomération soit effectuée,
b) dans la zone des équipements de contrôle du trafic, des panneaux alternants ou des feux de signalisation, l'attention soit particulièrement portée sur un changement de la nature du mode d'expression de la signalisation de trafic,
c) dans une zone où règne une mauvaise visibilité en raison du brouillard ou de la pluie, il soit plus particulièrement tenu compte de données d'image faiblement contrastées et l'action corrective menée visant alors notamment de préférence une amélioration du contraste des données d'image.

4. Procédé selon l'une des revendications précédentes, **caractérisé en ce qu'**au moins un paramètre décrivant une signalisation de trafic reconnue, ainsi que sa nature ou sa position ou son état ou sa visibilité ou encore sa taille est enregistré dans une mémoire de données mise à la disposition du système de navigation à base de cartes ou du système d'information de trafic.

5. Procédé selon l'une des revendications précédentes, **caractérisé en ce qu'**au moins un paramètre décrivant une signalisation de trafic reconnue, ainsi que sa nature ou sa position ou son état ou sa visibilité ou encore sa taille est enregistré dans une mémoire de données mise à la disposition du système de reconnaissance de signalisation de trafic.

6. Procédé selon l'une des revendications 4 ou 5, **caractérisé en ce qu'**un signal sonore ou visuel est émis à l'aide d'un générateur de signal intégré dans le module indicateur lorsqu'il se produit, le long d'un trajet déjà une fois parcouru, une modification de la position ou de la présence d'une signalisation de trafic.

7. Procédé selon l'une des revendications précédentes, **caractérisé en ce qu'**un programme d'application d'une logique de décision est commandé à partir des systèmes de navigation à base de cartes ou des systèmes d'information du trafic de manière à ce que l'image d'une signalisation de trafic reste affichée jusqu'à ce qu'un trajet prédéfini soit parcouru, lequel est de préférence spécifique à une classe.

8. Procédé selon la revendication 7, **caractérisé en ce que** les trajets prédéfinis sont fournis par un module de mémorisation.

9. Procédé selon l'une des revendications précédentes, **caractérisé en ce que** le système de reconnaissance de signalisation de trafic, lors du traitement des données d'image délivrées par un capteur d'image, examine celles-ci en vue de la présence de signalisations de trafic, extrait alors celles-ci, les sépare en classes supérieures et inférieures et, dans ce contexte, extrait des données caractéristiques spécifiques à une classe, lesquelles sont ensuite amenées dans une classification séparée.

10. Procédé selon la revendication 9, **caractérisé en ce que** cette classification est effectuée de manière hiérarchique, en plusieurs niveaux de classification.

11. Procédé selon la revendication 10, **caractérisé en ce que** les niveaux de classification sont organisés comme suit :
a) tout d'abord, seules les données caractéristiques appartenant à la classe supérieure de l'objet sont acheminées à un classificateur,
aa) si la classification réussit, dans quel cas la classe a pu être reconnue correcte avec une forte probabilité, les données caractéristiques sont remplacées par la représentation symbolique correspondante de la classe supérieure enregistrée dans le module de mémorisation,
ab) si la classification échoue, dans quel cas la classe n'a pas été reconnue correcte avec une forte probabilité, les données caractéristiques de la classe supérieure et les données caractéristiques de la classe inférieure sont remplacées par les données d'image correspondantes initialement issues du capteur d'image,
b) si la classification de la classe supérieure a réussi, les données caractéristiques appartenant à la classe inférieure de l'objet sont ensuite acheminées à un classificateur,
ba) si la classification réussit, dans quel cas la classe a pu être reconnue correcte avec une forte probabilité, les données caractéristiques sont remplacées par la représentation symbolique correspondante de la classe inférieure enregistrée dans le module de mémorisation,
bb) si la classification échoue, dans quel cas la classe n'a pas été reconnue correcte avec une forte probabilité, les données caractéristiques de la classe inférieure sont remplacées par les données d'image correspondantes initialement issues du capteur d'image.

12. Dispositif pour l'accroissement de puissance d'un système de reconnaissance de signalisation du trafic, lequel présente une caméra et un module d'analyse relié à celle-ci pour reconnaître l'image ou pour afficher l'image, le système étant relié avec au moins un système de navigation à base de cartes ou un système d'information de trafic afin d'utiliser les informations qui en sont issues lors de la reconnaissance ou de l'affichage des contenus de la signalisation du trafic enregistrée par la caméra et le système de reconnaissance de signalisation de trafic étant configuré de telle manière qu'il présente l'aptitude de fonctionner avec une puissance accrue lorsque les informations basées sur les cartes l'amènent à constater que le véhicule traverse une zone qui pose des problèmes au niveau de la reconnaissance de la signalisation de trafic.

13. Dispositif selon la revendication 12, **caractérisé en ce qu'**il existe une liaison par le biais d'un bus de données du véhicule entre le système, les systèmes de navigation à base de cartes et/ou les systèmes d'information de trafic.

14. Dispositif selon l'une des revendications précédentes, **caractérisé en ce que** le système de navigation à base de cartes ou le système d'information de trafic dispose d'une mémoire de données dans laquelle est enregistré au moins un paramètre décrivant une signalisation de trafic reconnue, ainsi que sa nature ou sa position ou son état ou sa visibilité ou encore sa taille.

15. Dispositif selon l'une des revendications précédentes, **caractérisé en ce que** le système de reconnaissance de signalisation de trafic dispose d'une mémoire de données dans laquelle est enregistré au moins un paramètre décrivant une signalisation de trafic reconnue, ainsi que sa nature ou sa position ou son état ou sa visibilité ou encore sa taille.

16. Dispositif selon l'une des revendications 14 ou 15, **caractérisé en ce que** le module indicateur comprend un générateur de signal qui émet un signal sonore ou visuel lorsqu'il se produit, le long d'un trajet déjà une fois parcouru, une modification de la position ou de la présence d'une signalisation de trafic.

17. Dispositif selon l'une des revendications précédentes, **caractérisé en ce qu'**un programme d'application d'une logique de décision est configuré dans le système, lequel affiche l'image d'une signalisation de trafic à partir des systèmes de navigation à base de cartes ou des systèmes d'information du trafic jusqu'à ce qu'un trajet prédéfini soit parcouru, lequel est de préférence spécifique à une classe.

18. Dispositif selon la revendication 16, **caractérisé en ce qu'**un module de mémorisation est configuré dans le système, dans lequel sont enregistrés les trajets prédéfinis et par le biais duquel ils sont rendus accessibles pour un traitement.

19. Dispositif selon l'une des revendications précédentes, **caractérisé en ce qu'**un dispositif de traitement est configuré dans le système de reconnaissance de signalisation de trafic, lequel examine les données d'image délivrées par un capteur d'image en vue de la présence de signalisations de trafic, extrait alors celles-ci, les sépare en classes supérieures et inférieures et, dans ce contexte, extrait des données caractéristiques spécifiques à une classe et les amène séparément à un classificateur.

20. Dispositif selon la revendication 21, **caractérisé en ce que** ce classificateur est structuré de manière hiérarchique, en plusieurs niveaux de classification.

21. Dispositif selon la revendication 22, **caractérisé en ce que** les niveaux de classification sont organisés de telle manière que le classificateur exécute les fonctions suivantes :
a) tout d'abord, seules les données caractéristiques appartenant à la classe supérieure de l'objet sont acheminées à un classificateur,
aa) si la classification réussit, dans quel cas la classe a pu être reconnue correcte avec une forte probabilité, les données caractéristiques sont remplacées par la représentation symbolique correspondante de la classe supérieure enregistrée dans le module de mémorisation,
ab) si la classification échoue, dans quel cas la classe n'a pas été reconnue correcte avec une forte probabilité, les données caractéristiques de la classe supérieure et les données caractéristiques de la classe inférieure sont remplacées par les données d'image correspondantes initialement issues du capteur d'image,
b) si la classification de la classe supérieure a réussi, les données caractéristiques appartenant à la classe inférieure de l'objet sont ensuite acheminées à un classificateur,
ba) si la classification réussit, dans quel cas la classe a pu être reconnue correcte avec une forte probabilité, les données caractéristiques sont remplacées par la représentation symbolique correspondante de la classe inférieure enregistrée dans le module de mémorisation,
bb) si la classification échoue, dans quel cas la classe n'a pas été reconnue correcte avec une forte probabilité, les données caractéristiques de la classe inférieure sont remplacées par les données d'image correspondantes initialement issues du capteur d'image.

## Revendications (Revendications pour l'(les) Etat(s) contractant(s) suivant(s): GR)

1. Procédé pour l'accroissement de puissance d'un système de reconnaissance de signalisation du trafic, lequel présente une caméra et un module d'analyse relié à celle-ci pour reconnaître l'image ou pour afficher l'image, **caractérisé en ce que** le système utilise des informations provenant au moins d'un système de navigation à base de cartes ou d'un système d'information de trafic lors de la reconnaissance ou de l'affichage des contenus de la signalisation du trafic enregistrée par la caméra.

2. Procédé selon la revendication 1, **caractérisé en ce que** le système communique avec les systèmes de navigation à base de cartes ou les systèmes d'information de trafic par le biais d'un bus de données du véhicule.

3. Procédé selon la revendication 1 ou 2, **caractérisé en ce que** le système de reconnaissance de signalisation de trafic commence à fonctionner avec une puissance accrue lorsque les informations basées sur les cartes l'amènent à constater que le véhicule traverse une zone qui pose des problèmes au niveau de la reconnaissance de la signalisation de trafic.

4. Procédé selon l'une des revendications 1 à 3, **caractérisé en ce qu'**un effort de reconnaissance supplémentaire particulier est développé à l'intérieur des zones qui posent des problèmes de telle manière que
a) dans la zone des entrées d'agglomération et des sorties d'agglomération, une recherche de panneaux d'entrée d'agglomération et de sortie d'agglomération soit effectuée,
b) dans la zone des équipements de contrôle du trafic, des panneaux alternants ou des feux de signalisation, l'attention soit particulièrement portée sur un changement de la nature du mode d'expression de la signalisation de trafic,
c) dans une zone où règne une mauvaise visibilité en raison du brouillard ou de la pluie, il soit plus particulièrement tenu compte de données d'image faiblement contrastées et l'action corrective menée visant alors notamment de préférence une amélioration du contraste des données d'image.

5. Procédé selon l'une des revendications précédentes, **caractérisé en ce qu'**au moins un paramètre décrivant une signalisation de trafic reconnue, ainsi que sa nature ou sa position ou son état ou sa visibilité ou encore sa taille est enregistré dans une mémoire de données mise à la disposition du système de navigation à base de cartes ou du système d'information de trafic.

6. Procédé selon l'une des revendications précédentes, **caractérisé en ce qu'**au moins un paramètre décrivant une signalisation de trafic reconnue, ainsi que sa nature ou sa position ou son état ou sa visibilité ou encore sa taille est enregistré dans une mémoire de données mise à la disposition du système de reconnaissance de signalisation de trafic.

7. Procédé selon l'une des revendications 5 ou 6, **caractérisé en ce qu'**un signal sonore ou visuel est émis à l'aide d'un générateur de signal intégré dans le module indicateur lorsqu'il se produit, le long d'un trajet déjà une fois parcouru, une modification de la position ou de la présence d'une signalisation de trafic.

8. Procédé selon l'une des revendications précédentes, **caractérisé en ce qu'**un programme d'application d'une logique de décision est commandé à partir des systèmes de navigation à base de cartes ou des systèmes d'information du trafic de manière à ce que l'image d'une signalisation de trafic reste affichée jusqu'à ce qu'un trajet prédéfini soit parcouru, lequel est de préférence spécifique à une classe.

9. Procédé selon la revendication 8, **caractérisé en ce que** les trajets prédéfinis sont fournis par un module de mémorisation.

10. Procédé selon l'une des revendications précédentes, **caractérisé en ce que** le système de reconnaissance de signalisation de trafic, lors du traitement des données d'image délivrées par un capteur d'image, examine celles-ci en vue de la présence de signalisations de trafic, extrait alors celles-ci, les sépare en classes supérieures et inférieures et, dans ce contexte, extrait des données caractéristiques, spécifiques à une classe, lesquelles sont ensuite amenées dans une classification séparée.

11. Procédé selon la revendication 10, **caractérisé en ce que** cette classification est effectuée de manière hiérarchique, en plusieurs niveaux de classification.

12. Procédé selon la revendication 11, **caractérisé en ce que** les niveaux de classification sont organisés comme suit :
a) tout d'abord, seules les données caractéristiques appartenant à la classe supérieure de l'objet sont acheminées à un classificateur,
aa) si la classification réussit, dans quel cas la classe a pu être reconnue correcte avec une forte probabilité, les données caractéristiques sont remplacées par la représentation symbolique correspondante de la classe supérieure enregistrée dans le module de mémorisation,
ab) si la classification échoue, dans quel cas la classe n'a pas été reconnue correcte avec une forte probabilité, les données caractéristiques de la classe supérieure et les données caractéristiques de la classe inférieure sont remplacées par les données d'image correspondantes initialement issues du capteur d'image,
b) si la classification de la classe supérieure a réussi, les données caractéristiques appartenant à la classe inférieure de l'objet sont ensuite acheminées à un classificateur,
ba) si la classification réussit, dans quel cas la classe a pu être reconnue correcte avec une forte probabilité, les données caractéristiques sont remplacées par la représentation symbolique correspondante de la classe inférieure enregistrée dans le module de mémorisation,
bb) si la classification échoue, dans quel cas la classe n'a pas été reconnue correcte avec une forte probabilité, les données caractéristiques de la classe inférieure sont remplacées par les données d'image correspondantes initialement issues du capteur d'image.

13. Dispositif pour l'accroissement de puissance d'un système de reconnaissance de signalisation du trafic, lequel présente une caméra et un module d'analyse relié à celle-ci pour reconnaître l'image ou pour afficher l'image, **caractérisé en ce que** le système est relié avec au moins un système de navigation à base de cartes ou un système d'information de trafic afin d'utiliser les informations qui en sont issues lors de la reconnaissance ou de l'affichage des contenus de la signalisation du trafic enregistrée par la caméra.

14. Dispositif selon la revendication 13, **caractérisé en ce qu'**il existe une liaison par le biais d'un bus de données du véhicule entre le système, les systèmes de navigation à base de cartes et/ou les systèmes d'information de trafic.

15. Dispositif selon la revendication 13 ou 14, **caractérisé en ce que** le système de reconnaissance de signalisation de trafic présente l'aptitude de fonctionner avec une puissance accrue lorsque les informations basées sur les cartes l'amènent à constater que le véhicule traverse une zone qui pose des problèmes au niveau de la reconnaissance de la signalisation de trafic.

16. Dispositif selon l'une des revendications précédentes, **caractérisé en ce que** le système de navigation à base de cartes ou le système d'information de trafic dispose d'une mémoire de données dans laquelle est enregistré au moins un paramètre décrivant une signalisation de trafic reconnue, ainsi que sa nature ou sa position ou son état ou sa visibilité ou encore sa taille.

17. Dispositif selon l'une des revendications précédentes, **caractérisé en ce que** le système de reconnaissance de signalisation de trafic dispose d'une mémoire de données dans laquelle est enregistré au moins un paramètre décrivant une signalisation de trafic reconnue, ainsi que sa nature ou sa position ou son état ou sa visibilité ou encore sa taille.

18. Dispositif selon l'une des revendications 16 ou 17, **caractérisé en ce que** le module indicateur comprend un générateur de signal qui émet un signal sonore ou visuel lorsqu'il se produit, le long d'un trajet déjà une fois parcouru, une modification de la position ou de la présence d'une signalisation de trafic.

19. Dispositif selon l'une des revendications précédentes, **caractérisé en ce qu'**un programme d'application d'une logique de décision est configuré dans le système, lequel affiche l'image d'une signalisation de trafic à partir des systèmes de navigation à base de cartes ou des systèmes d'information du trafic jusqu'à ce qu'un trajet prédéfini soit parcouru, lequel est de préférence spécifique à une classe.

20. Dispositif selon la revendication 16, **caractérisé en ce qu'**un module de mémorisation est configuré dans le système, dans lequel sont enregistrés les trajets prédéfinis et par le biais duquel ils sont rendus accessibles pour un traitement.

21. Dispositif selon l'une des revendications précédentes, **caractérisé en ce qu'**un dispositif de traitement est configuré dans le système de reconnaissance de signalisation de trafic, lequel examine les données d'image délivrées par un capteur d'image en vue de la présence de signalisations de trafic, extrait alors celles-ci, les sépare en classes supérieures et inférieures et, dans ce contexte, extrait des données caractéristiques spécifiques à une classe et les amène séparément à un classificateur.

22. Dispositif selon la revendication 21, **caractérisé en ce que** ce classificateur est structuré de manière hiérarchique, en plusieurs niveaux de classification.

23. Dispositif selon la revendication 22, **caractérisé en ce que** les niveaux de classification sont organisés de telle manière que le classificateur exécute les fonctions suivantes :
a) tout d'abord, seules les données caractéristiques appartenant à la classe supérieure de l'objet sont acheminées à un classificateur,
aa) si la classification réussit, dans quel cas la classe a pu être reconnue correcte avec une forte probabilité, les données caractéristiques sont remplacées par la représentation symbolique correspondante de la classe supérieure enregistrée dans le module de mémorisation,
ab) si la classification échoue, dans quel cas la classe n'a pas été reconnue correcte avec une forte probabilité, les données caractéristiques de la classe supérieure et les données caractéristiques de la classe inférieure sont remplacées par les données d'image correspondantes initialement issues du capteur d'image,
b) si la classification de la classe supérieure a réussi, les données caractéristiques appartenant à la classe inférieure de l'objet sont ensuite acheminées à un classificateur,
ba) si la classification réussit, dans quel cas la classe a pu être reconnue correcte avec une forte probabilité, les données caractéristiques sont remplacées par la représentation symbolique correspondante de la classe inférieure enregistrée dans le module de mémorisation,
bb) si la classification échoue, dans quel cas la classe n'a pas été reconnue correcte avec une forte probabilité, les données caractéristiques de la classe inférieure sont remplacées par les données d'image correspondantes initialement issues du capteur d'image.
